# EUROPEAN PATENT SPECIFICATION

(11) **EP 1 252 273 B1**
(45) Date of publication and mention of the grant of the patent: **24.05.2006**
(21) Application number: 00984932.4
(22) Date of filing: 22.12.2000
(51) Int. Cl.: C10L 5/48, B05B 15/04

(54) **METHOD FOR THE USE OF POWDERED MATERIAL**
VERFAHREN ZUR VERWENDUNG PULVERFÖRMIGEN MATERIALS
PROCEDE D'UTILISATION DE MATERIAUX EN POUDRE

(30) Priority: 30.12.1999 DK 189299
(43) Date of publication of application: 30.10.2002
(73) Proprietor: Jensen, Gert Hjort, 5592 Ejby (DK); Thagaard, Niels, 5580 Norre-Aby (DK)
(72) Inventor: Jensen, Gert Hjort, 5592 Ejby (DK); Thagaard, Niels, 5580 Norre-Aby (DK)
(74) Representative: Gregersen, Niels Henrik
(86) International application number: PCT/DK2000/000729
(87) International publication number: WO 2001/049813

(56) References cited:
- EP-A1- 0 164 502
- WO-A1-90/08178
- DE-A1- 2 935 103
- DE-A1- 4 002 591
- DE-C1- 4 243 155
- US-A- 4 822 379
- US-A- 5 464 454
- DATABASE WPI Week 198837, Derwent Publications Ltd., London, GB; AN 1988-261884, XP002953063 & JP 63 191 896 A (IZUMI T) 09 August 1988
- DATABASE WPI Week 199538, Derwent Publications Ltd., London, GB; AN 1995-290693, XP002953064 & JP 7 188 685 A (CHUDEN KAKO KK ET AL.) 25 July 1995
- DATABASE WPI Week 199043, Derwent Publications Ltd., London, GB; AN 1990-323746, XP002953065 & JP 2 229 888 A (SEIKATSU KANKYO SOZ) 12 September 1990

## Description

The present invention concerns a method for utilising of combustible powdery waste material in the form of paint powder or paint abrasive dust.

Disposal of environmentally dangerous waste in the form of paint powder and/or paint abrasive dust from industrial painters and similar powdery waste material may in practice result in a very great economic load for the firm in question. Legal disposal of such environmental waste occurs by packing it into plastic bags and cardboard boxes of e.g. 20 kg and transporting the environmental waste to Kommunekemi (public incineration works for chemical waste in Denmark) which claims a destruction fee in the order of DKK 4.50 per kg.

The relatively great fee for destruction is the reason in practice that too often one sees illegal deposition on rubbish dumps or illegal incineration on the area of the firm or, even worse, in nature. By its nature, incineration is a very risky affair since the actual powdery waste products very often have so high calorific value and are so unstable that there is risk of completely uncontrollable, explosive fires, which, by the way, is the real reason for the actual environmental waste to be required sent to destruction at Kommunekemi by order from the environmental authorities.

JP-A-63191896 discloses preparation of a solid fuel through reuse of all types of combustible wastes by dehydrating and drying every-days waste, grinding and thermal compressing. The ground product is heat-compressed to sinter the surface in order to obtain a solid fuel.

JP-A-7188685 discloses a solid fuel regenerated from resin waste and heavy crude oil ash preparation by kneading, extruding, cutting drying and solidifying and sued as boiler fuel. Also claimed is preparation of the fuel comprises pretreating one or a mixture of the monomer and paint wastes by stirring, kneading the resultant mixture with the ash, moulding the kneaded product by extrusion, cutting, drying and solidifying to a special shape and packing in appropriate units The fuel has a sufficient calorific value and long stability and quality and is easy to handle and safe.

DE-C-4243155 discloses compaction of mixed waste and residues, preferably acid resins and paint residues - to give strong compacts for use in fixed bed gasification. Consolidation of mixtures of waste and residues, especially dry to pasty fibrous and finely dispersed organic or inorganic wastes or residues for use in bed pressure gasification, is carried out in conventional presses.

On that background, the purpose of the invention is to indicate a method for utilising of combustible powdery waste material in the form of paint powder or paint abrasive dust, the method enabling disposal and simultaneous utilisation of environmental waste of the kind mentioned in a very simple way.

The method according to the invention is characterised in that the powdery material in a way known per se is rolled or compressed to tablets, pills or briquettes, and that the rolling or compressing is performed in a such manner that sufficient high frictional heat is produced in order that the surface of the tablets, pills or briquettes is fused . In a very simple way it hereby becomes considerably easier to dispose of and simultaneously to utilise environmental waste of the said type as the briquetted waste material may be used a fuel which is easily fired into incinerators or combustion units of power stations, and which is now completely without dust explosion risk.

It is a very important aspect of the invention that by the indicated way it becomes possible to make a useful fuel from otherwise difficult environmental waste, i.e. instead of paying a relatively great destruction fee, it now becomes possible to sell the briquetted waste material, preferably for use as fuel in power station boilers etc.

Advantageously, the method according to the invention may be utilised in such a way that the rolling or compressing occurs by means of screw compressor wherefrom the compressed material is discharged as a sintered, cylindrical sausage of material which is continuously broken off into lesser briquette-like pieces.

Besides, it may be advantageous that the method according to the invention is performed so that a suitable binder is added to the powdery waste material prior to the rolling or compressing.

Preferably, the method according to the invention is performed so that the tablets, pills or briquettes are used as fuel in power station boilers or cogeneration plants stations.

The making of the tablets, pills or briquettes by rolling or compressing will not be explained in more detail as materials known per se are preferably used for rolling or compressing of the powdery waste material to tablets, pills or preferably briquettes.

## Claims

1. A method for utilising of combustible powdery waste material in the form of paint powder or paint abrasive dust, **characterised in that** the powdery material in a way known per se is rolled or compressed to tablets, pills or briquettes, and that the rolling or compressing is performed in a such manner that sufficient high frictional heat is produced in order that the surface of the tablets, pills or briquettes is fused.

2. A method according to claim 1, **characterised in that** the rolling or compressing is performed by means of a screw compressor from which the compressed material is discharged as a sintered, cylindrical sausage of material which is continuously broken off into lesser briquette-like pieces.

3. A method according to claim 1, **characterised in that** a suitable binder is added to the powdery waste material prior to the rolling or compressing.

4. A method according to any of the preceding claims, **characterised in that** the tablets, pills or briquettes are used as fuel in power station boilers or cogeneration plants.

## Patentansprüche

1. Verfahren zum Verwenden eines verbrennbaren pulverförmigen Abfallmaterials in der Form eines Farbpulvers oder eines Farbabriebstaubs,
**dadurch gekennzeichnet, dass** das pulverförmige Material in einer an sich bekannten Weise zu Tabletten, Pillen oder Formlingen gerollt oder gepresst wird, und dass das Rollen oder Kompressen derart durchgeführt wird, dass eine ausreichende Reibungswärme erzeugt wird, sodass die Oberfläche der Tabletten, Pillen oder Formlinge geschmolzen wird.

2. Verfahren nach Anspruch 1,
**dadurch gekennzeichnet, dass** das Rollen oder Komprimieren mittels einer Schraubenpresse durchgeführt wird, aus der das komprimierte Material als gesinterte zylindrische Materialwurst entladen wird, von der kontinuierlich kleinere formlingartige Stücke abgebrochen werden.

3. Verfahren nach Anspruch 1,
**dadurch gekennzeichnet, dass** ein geeigneter Binder zu dem pulverförmigen Abfallmaterial vor dem Rollen oder Komprimieren zugegeben wird.

4. Verfahren nach einem der vorhergehenden Ansprüche,
**dadurch gekennzeichnet, dass** die Tabletten, Pillen oder Formlinge als Brennstoff in Boilern von Kraftwerken oder in Kraftwärmekopplungsanlagen verwendet werden.

## Revendications

1. Procédé d'utilisation d'une matière de rebut combustible en poudre sous la forme d'une poudre de peinture ou d'une poussière abrasive de peinture, **caractérisé en ce que** la matière en poudre est roulée ou comprimée d'une manière connue en comprimés, pilules ou briquettes, et **en ce que** le roulage ou la compression est effectué d'une manière telle qu'une chaleur de frottement suffisamment intense est produite pour que la surface des comprimés, pilules ou briquettes fonde.

2. Procédé selon la revendication 1, **caractérisé en ce que** le roulage ou la compression est effectué au moyen d'un compresseur à vis duquel la matière comprimée est déchargée sous la forme d'un boudin cylindrique fritté de matière qui est sectionné en continu en pièces plus petites analogues à des briquettes.

3. Procédé selon la revendication 1, **caractérisé en ce qu'**un liant convenable est ajouté à la matière de rebut en poudre avant le roulage ou la compression.

4. Procédé selon l'une quelconque des revendications précédentes, **caractérisé en ce que** les comprimés, pilules ou briquettes sont utilisés en tant que combustible dans des chaudières de centrales de production d'énergie ou des installations de cogénération.
